# EUROPEAN PATENT SPECIFICATION

(11) **EP 3 606 022 B1**
(45) Date of publication and mention of the grant of the patent: **23.06.2021**
(21) Application number: 18770553.8
(22) Date of filing: 09.03.2018
(51) Int. Cl.: H04N 5/225, H04M 1/02, G03B 19/22, G03B 17/12

(54) **DUAL-CAMERA MODULE AND MOBILE TERMINAL**
DOPPELKAMERAMODULANORDNUNG UND MOBILES ENDGERÄT
MODULE À DOUBLE CAMÉRA ET TERMINAL MOBILE

(30) Priority: 20.03.2017 CN 201710164844
(43) Date of publication of application: 05.02.2020
(73) Proprietor: Vivo Mobile Communication Co., Ltd., Dongguan, Guangdong 523860 (CN)
(72) Inventor: GAO, Feng, Dongguan, Guangdong 523860 (CN); CHENG, Chuanbo, Dongguan, Guangdong 523860 (CN)
(74) Representative: Conti, Marco
(86) International application number: PCT/CN2018/078583
(87) International publication number: WO 2018/171446

(56) References cited:
- CN-A- 104 333 687
- CN-A- 104 932 174
- CN-A- 106 231 018
- CN-A- 106 249 515
- CN-A- 106 249 515
- CN-A- 106 657 486
- CN-U- 202 652 361
- CN-U- 202 652 361
- CN-U- 206 294 242
- US-A1- 2011 267 432
- US-A1- 2013 229 496

## Description

### TECHNICAL FIELD

The present disclosure relates to the field of mobile terminal, in particular to a dual camera module and a mobile terminal.

### BACKGROUND

In order to obtain an improved photographing effect, in addition to enhance respective parameters of traditional single camera, a mobile terminal in a related art is further equipped with a dual camera. In the related art, in the case that the dual camera is fixed on the mobile terminal, typically, each camera needs a base on which the camera is fixed, and the two bases each fixed with a camera are arranged on an installation bracket provided with an optical filter. However, such camera having separated bases has poor strength, and requires the mobile terminal to provide extra space for protecting the single camera module, thereby an available space of the mobile terminal is reduced and a design flexibility of the mobile terminal is lowered. In addition, the poor strength of the camera module also leads to a degraded performance of the camera module and reduce a yield of the camera module. Besides, the camera module having the separated bases leads to increased production process of the manufacturer and reduced production efficiency.

For the reasons as mentioned above, the dual camera module in the related art has the problem of poor strength and occupying large space due to the separated structure of the bases each corresponding to a camera.

US 2011/267432A1 disclosed a camera system including a first camera, a second camera, a detachable mechanism capable of attaching and detaching the first and second cameras to and from each other. The first camera has a first lens barrel having a first optical axis, and configured to form a first optical image, and a first imaging device configured to receive the first optical image to generate an electrical image signal. The second camera has a second lens barrel having a second optical axis different from the first optical axis and configured to form a second optical image and a second imaging device configured to receive the second optical image to generate an electrical image signal. When the first and second cameras simultaneously or successively perform shooting, an angle of view of the first lens barrel is wider than that of the second lens barrel.

CN202652361U disclosed a dual camera module including a first camera, a second camera, a base and a connector; the base is provided with two camera installation grooves, the first camera is arranged in one of the camera installation grooves, and the second camera is arranged in the other camera installation groove. The first camera and the second camera are respectively connected to different pins of the connector. By using the dual camera module, a device having dual cameras can be easily assembled, the problem of relative position and angle deviation can be avoided, and the costs of the dual camera device can be reduced.

### SUMMARY

The present disclosure provides a dual camera module and a mobile terminal to solve the problem that the dual camera module in the related art has poor strength and occupies large space due to the separated structure of the bases each corresponding to a camera.

In a first aspect, a dual camera module is provided according to claim 1.

In a second aspect, a mobile terminal is provided by some embodiments of the present disclosure, including the dual camera module according to the first aspect.

Thus, in the dual camera module provided by the embodiments of the present disclosure, the lens mounting portion included in the installation bracket is connected to the base supporting portion, and the second camera in the dual camera module is directly mounted on the lens mounting portion, and the base on which the first camera is mounted is fixed on the base supporting portion. In this way, the second camera is directly mounted on the lens mounting portion. Compared with the dual camera module in the related art, the second camera is not required to be firstly fixed on a base, thereby a base structure can be omitted and the number of parts in the dual camera module is reduced, and the mounting process of the second camera is simplified, thereby increasing the structural strength of the dual camera module. In addition, since the lens mounting portion is connected to the base supporting portion, the base on which the first camera is mounted is fixed on the base supporting portion, so that the first camera and the second camera are integrated on a same installation bracket. In this way, the overall strength of the dual camera module is increased, and the overall space occupied by the dual camera module is reduced, thereby solving the problem that the dual camera module in the related art has poor strength and occupies large space due to the separated structure of the bases each corresponding to a camera.

### BRIEF DESCRIPTION OF THE DRAWINGS

In order to more clearly illustrate the technical solutions of the embodiments of the present disclosure, the drawings to be used in the description of the embodiments of the present disclosure will be described briefly below. Obviously, the drawings in the following description are merely some embodiments of the present disclosure. For those skilled in the art, other drawings can also be obtained on the basis of these drawings without creative efforts.

Fig.1 shows a schematic structural view of a dual camera module according to some embodiments of the present disclosure;

Fig.2 shows a cross-sectional view of an installation bracket in which a base is fixed according to some embodiments of the present disclosure.

### DETAILED DESCRIPTION

Technical solutions of the embodiments of the present disclosure will be clearly and completely described below in conjunction with the drawings of the embodiments of the present disclosure. It is apparent that the described embodiments are a part of the embodiments of the present disclosure, rather than all of them.

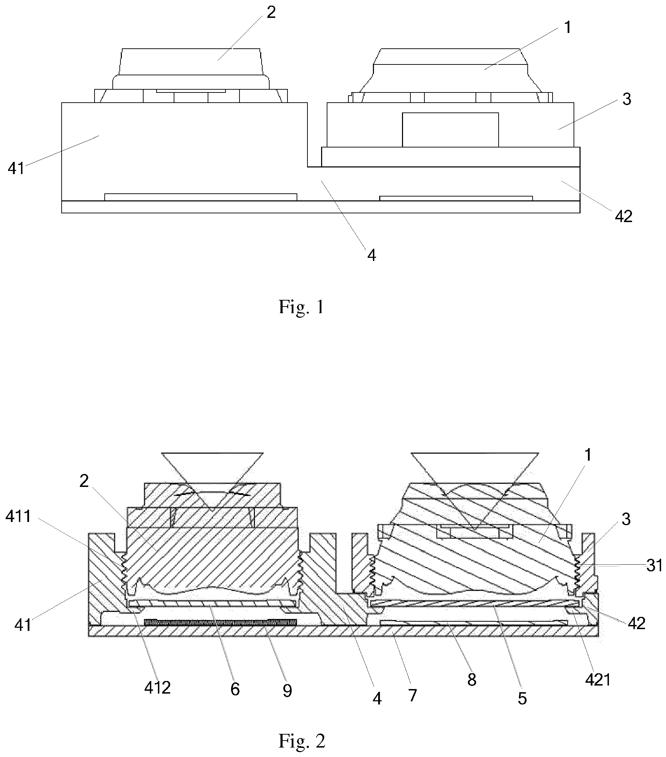

As shown in Fig. 1 and Fig. 2, a dual camera module is provided by some embodiments of the present disclosure, including:
a first camera 1 and a second camera 2;
a base 3 on which the first camera 1 is mounted;
an installation bracket 4, in which the installation bracket 4 includes a lens mounting portion 41 and a base supporting portion 42 connected to the lens mounting portion 41, the second camera 2 is mounted on the lens mounting portion 41, and the base 3 is fixed on the base supporting portion 42.

Thus, the dual camera module includes a first camera 1 mounted on the base 3, and then the base 3 on which the first camera 1 is mounted is fixed to the base supporting portion 42 in the installation bracket 4. In addition, the second camera 2 is directly fixed on the lens mounting portion 41 of the installation bracket 4 connected to the base supporting portion 42. Compared with the dual camera module in the related art, the second camera 2 is no longer required to be fixed on the base, and can be directly fixed on the lens mounting portion 41, the base structure can be omitted and the production and mounting process of the camera module factory can be reduced, thereby improving the production efficiency and yield. In addition, the number of parts in the dual camera module is reduced, thereby reducing the mounting process of the second camera and increasing the structural strength of the dual camera module. Besides, the lens mounting portion 41 included in the installation bracket 4 is connected to the base supporting portion 42, and the base 3 is fixed on the base supporting portion 42, so that the first camera and the second camera are integrated on the same installation bracket, the overall strength of the dual camera module is increased, and the overall space occupied by the dual camera module is reduced, thereby solving the problem that the dual camera module in the related art has poor strength and occupies large space due to the separated structure of the bases each corresponding to a camera.

Further, as shown in Fig. 2, the lens mounting portion 41 is a first hollow structure, the base supporting portion 42 is a second hollow structure, and an outer sidewall of the base supporting portion 42 is integrally formed with an outer sidewall of the lens mounting portion 41.

Thus, the outer sidewall of the base supporting portion 42 and the outer sidewall of the lens mounting portion 41 are integrally formed, which can increase the connection strength between the base supporting portion 42 and the lens mounting portion 41, thereby increasing the overall structure strength of the dual camera module. In addition, the structure integrally formed also save the overall space occupied by the dual camera module. Further, both the lens mounting portion 41 and the base supporting portion 42 are set to be hollow structures, thereby facilitating mounting the second camera 2 and fixing the base 3.

Specifically, in order to facilitate using the first camera 1 and the second camera 2, an axis line of the base supporting portion 42 is parallel to an axis line of the lens mounting portion 41. In this way, in the case that the second camera 2 is mounted on the lens mounting portion 41 and the base 3 on which the first camera 1 is fixed is fixed on the base supporting portion 42, the orientations of the first camera 1 and the second camera 2 can be uniform, thereby facilitating using the dual camera module.

Further, as shown in Fig. 2, the base 3 is a third hollow structure. Specifically, a first screw thread 31 is arranged on an inner wall of the base 3, a second screw thread is arranged on an outer end surface of the first camera 1, and the first camera 1 is fixed on the base 3 by engagement of the second screw thread with the first screw thread 31. Thus, according to fixing the first camera 1 by means of screw meshing, the fixing firmness of the first camera 1 can be increased.

Further, as shown in Fig. 1 and Fig. 2, the base 3 is fixed to a top end surface of the base supporting portion 42, thereby facilitating mounting and fixing the base 3.

Specifically, an upper inner diameter of the base 3 is same as a lower inner diameter of the base 3, a thickness of a sidewall of a middle portion of the base 3 is greater than a thickness of a sidewall of an upper portion of the base 3, and a thickness of a sidewall of a lower portion of the base 3 is smaller than the thickness of the sidewall of the middle portion of the base 3, so that a first Z-shaped shoulder structure is formed at a joint of the middle portion of the base 3 and the lower portion of the base 3. In addition, an upper outer diameter of the base supporting portion 42 is same as a lower outer diameter of the base supporting portion 42, and the thickness of the sidewall at a position under a top end surface of the base supporting portion 42 is greater than a thickness of a sidewall at a top portion, so that a second Z-shaped shoulder structure is formed at the upper portion of the base supporting portion 42 and matched with the first Z-shaped shoulder structure of the base. Thus, in the case that the base 3 is fixed to the top end surface of the base supporting portion 42, the first shoulder structure and the second shoulder structure can be fitted and fixed, thereby further increasing the fixing firmness of the base 3.

Further, as shown in Fig. 2, a third screw thread 411 is arranged on an inner wall of the lens mounting portion 41, and a fourth screw thread is arranged on an outer surface of an end portion of the second camera 2, and the second camera 2 is fixedly mounted on the lens mounting portion 41 by engagement of the third screw thread 411 with the fourth screw thread. Thus, the second camera 2 is fixedly mounted onto the lens mounting portion 41 directly by engagement of the fourth screw with the third screw 411. Compared with the dual camera module in the related art, it is no longer necessary to fix the second camera 2 on the base first, thereby a base structure can be omitted and the mounting process of the second camera is simplified. In addition, since the base structure and the fixing process between the base and the installation bracket are omitted, the parts and the mounting process of the dual camera module are reduced, and the structural strength of the installation bracket is high, thereby increasing the overall structural strength of the dual camera module.

Further, as shown in Fig. 2, the dual camera module includes a first optical filter 5 and a first boss 421 protruding outward at a position on the inner wall of the base supporting portion 42. The first optical filter 5 is fixed on the first boss 421 and arranged opposite to the first camera 1 fixed on the base 3.

Thus, a first optical filter 5 opposing to the first camera 1 is arranged in a cavity of the base supporting portion 42, so that a visible light components entering the base supporting portion 42 through the first camera 1 can be adjusted. Specifically, a first annular boss may be arranged at a position on the inner wall of the base supporting portion 42, which can increase the stability of the fixed first optical filter. In addition, specifically, the first boss 421 can be formed by protruding outward at a position at a middle portion of the base supporting portion 42, and the first optical filter 5 may be fixed to the first boss 421, and a first circuit board 7 may be fixed at the bottom of the base supporting portion 42, such that the first optical filter 5, a lower portion of the base supporting portion 42 (a portion of the base supporting portion 42 located under the first boss 421), and the first circuit board 7 can surround a sealed cavity. Then, a first image sensor 8 is fixed at a position on the first circuit board 7 opposite to the first optical filter 5, so that light can be projected on the first image sensor 8 through the first camera 1 and the first optical filter 5.

In addition, the dual camera module further includes a second optical filter 6, and a second boss 412 formed by protruding outward at a position on the inner wall of the lens mounting portion 41 and under the third screw thread 411. The second optical filter 6 is fixed on the second boss 412 and arranged opposite to the second camera 2 mounted on the lens mounting portion 41.

Thus, a second optical filter 6 arranged opposite to the second camera 2 is arranged at a position under the third screw 411 in the lens mounting portion 41, so that a visible light components entering the lens mounting portion 41 through the second camera 2 can be adjusted. Specifically, a second annular boss may be arranged at a position on the inner wall of the lens mounting portion 41 and under the third screw 411, which can increase the fixing stability of the second optical filter. In addition, specifically, the second boss 412 can be formed by protruding outward at a position on the inner wall of the lens mounting portion 41, under the third screw 411 and on the bottom of the lens mounting portion 41, and the second optical filter 6 may be fixed to the second boss 412, and a second circuit board may be fixed at the bottom of the lens mounting portion 41, such that the second optical filter 6, a lower portion of the lens mounting portion 41 (a portion of the lens mounting portion 41 located under the second boss 412), and the second circuit board can surround a sealed cavity. Then, a second image sensor 9 is fixed at a position on the second circuit board opposite to the second optical filter 6, so that light can be projected on the second image sensor 9 through the second camera 2 and the second optical filter 6. Specifically, the second circuit board and the first circuit board 7 may be a same circuit board.

Thus, in at least one embodiment of the present disclosure, the second camera is directly mounted on the lens mounting portion provided with the second optical filter, and then the base on which the first camera is mounted is fixed on the base supporting portion provided with the first optical filter, so that the second camera and the second optical filter are both integrated on the installation bracket. Compared with the dual camera module in the related art, the second camera is not required to be firstly mounted on the base, and then the base is fixed on the installation bracket provided with the optical filter, the base structure is omitted and the production and mounting process of the camera module factory is reduced, thereby improving the production efficiency and yield. In addition, since the lens mounting portion included in the installation bracket is connected to the base supporting portion, the structural strength of the installation bracket is increased. Since the number of parts in the dual camera module and the mounting process are reduced, the structural strength of the dual camera module is increased, and the space occupied by the dual camera module is reduced, thereby solving the problem that the dual camera module in the related art has poor strength and occupies large space due to the separated structure of the bases each corresponding to a camera.

A mobile terminal is further provided by some embodiments of the present disclosure, including the dual camera module according to some embodiments of the present disclosure. Specifically, the mobile terminal includes at least one of a mobile phone, a tablet computer, an e-book reader, an MP3 player, an MP4 player, a digital camera, a laptop portable computer, a car computer, a desktop computer, a set top box, a smart TV, and a wearable device.

The mobile terminal in some embodiments of the present disclosure can implement various processes implemented by the dual camera module in the above embodiments. To avoid repetition, details are not described herein again.

The various embodiments in the description are described in a progressive manner, and each embodiment focuses on differences from other embodiments, and the same or similar parts between the various embodiments can be referred to each other.

## Claims

1. A dual camera module for a mobile terminal, comprising a first camera (1) and a second camera (2), a base (3), a first optical filter (5), a first circuit board (7) and a first image sensor (8), wherein
the dual camera module further comprises an installation bracket (4), wherein the installation bracket (4) comprises a lens mounting portion (41) and a base supporting portion (42) connected to the lens mounting portion (41), the second camera (2) is mounted on the lens mounting portion (41), and the base (3) is fixed on the base supporting portion (42); and
a first boss (421) protruding outward at a position on the inner wall of the base supporting portion (42), wherein the first optical filter (5) is fixed on the first boss (421) and arranged opposite to the first camera (1) mounted on the base (3);
wherein the first camera (1) is mounted on the base (3);
the first circuit board (7) is fixed at the bottom of the base supporting portion (42); and
the first image sensor (8) is fixed at a position on the first circuit board (7) opposite to the first optical filter (5).

2. The dual camera module according to claim 1, wherein
the lens mounting portion (41) is a first hollow structure, the base supporting portion (42) is a second hollow structure, and an outer sidewall of the base supporting portion (42) is integrally formed with an outer sidewall of the lens mounting portion (41).

3. The dual camera module according to claim 2, wherein
an axis line of the base supporting portion (42) is parallel to an axis line of the lens mounting portion (41).

4. The dual camera module according to claim 2, wherein
the base (3) is fixed to a top end surface of the base supporting portion (42).

5. The dual camera module according to claim 1, wherein the base (3) is a third
hollow structure.

6. The dual camera module according to claim 5, wherein a first screw thread (31) is arranged on an inner wall of the base (3), a second screw thread is arranged on an outer end surface of the first camera (1), and the first camera (1) is fixedly mounted on the base (3) by engagement of the second screw thread with the first screw thread (31).

7. The dual camera module according to claim 2, wherein a third screw thread (411) is arranged on an inner wall of the lens mounting portion (41), a fourth screw thread is arranged on an outer end surface of the second camera (2), and the second camera (2) is fixedly mounted on the lens mounting portion (41) by engagement of the fourth screw thread with the third screw thread (411).

8. The dual camera module according to claim 7, further comprising a second optical filter (6), and a second boss (412) protruding outward at a position on the inner wall of the lens mounting portion (41) and under the third screw thread (411),
wherein the second optical filter (6) is fixed on the second boss (412) and arranged opposite to the second camera (2) mounted on the lens mounting portion (41).

9. A mobile terminal comprising the dual camera module according to any one of claims 1 to 8.

## Patentansprüche

1. Doppelkameramodul für ein mobiles Endgerät, umfassend eine erste Kamera (1) und eine zweite Kamera (2), eine Basis (3), ein erstes optisches Filter (5), eine erste Leiterplatte (7) und einen ersten Bildsensor (8), wobei das Doppelkameramodul ferner eine Installationshalterung (4) umfasst, wobei die Installationshalterung (4) einen Objektivmontageabschnitt (41) und einen Basisstützabschnitt (42) umfasst, der mit dem Objektivmontageabschnitt (41) verbunden ist, die zweite Kamera (2) an dem Objektivmontageabschnitt (41) montiert ist, und die Basis (3) an dem Basisstützabschnitt (42) befestigt ist; und
einen ersten Vorsprung (421), der an einer Position an der Innenwand des Basisstützabschnitts (42) nach außen vorsteht, wobei der erste optische Filter (5) am ersten Vorsprung (421) befestigt und gegenüber der ersten Kamera (1), die an der Basis (3) montiert ist, angeordnet ist;
wobei die erste Kamera (1) an der Basis (3) montiert ist;
die erste Leiterplatte (7) ist am Boden des Basisstützabschnitts (42) befestigt; und
der erste Bildsensor (8) ist an einer Position auf der ersten Leiterplatte (7) gegenüber dem ersten optischen Filter (5) befestigt.

2. Doppelkameramodul nach Anspruch 1, wobei der Objektivmontageabschnitt (41) eine erste Hohlstruktur ist, der Basisstützabschnitt (42) eine zweite Hohlstruktur ist und eine äußere Seitenwand des Basisstützabschnitts (42) einstückig mit einer äußeren Seitenwand des Objektivmontageabschnitt (41) gebildet ist.

3. Doppelkameramodul nach Anspruch 2, wobei eine Achsenlinie des Basisstützabschnitts (42) parallel zu einer Achsenlinie des Objektivmontageabschnitts (41) verläuft.

4. Doppelkameramodul nach Anspruch 2, wobei die Basis (3) an einer oberen Endfläche des Basisstützabschnitts (42) befestigt ist.

5. Doppelkameramodul nach Anspruch 1, wobei die Basis (3) eine dritte Hohlstruktur ist.

6. Doppelkameramodul nach Anspruch 5, wobei ein erstes Schraubengewinde (31) an einer Innenwand der Basis (3) angeordnet ist, ein zweites Schraubengewinde an einer äußeren Endfläche der ersten Kamera (1) angeordnet ist und die erste Kamera (1) durch Eingreifen des zweiten Schraubengewindes mit dem ersten Schraubengewinde (31) fest an der Basis (3) montiert ist.

7. Doppelkameramodul nach Anspruch 2, wobei ein drittes Schraubengewinde (411) an einer Innenwand des Objektivmontageabschnitts (41) angeordnet ist, ein viertes Schraubengewinde an einer äußeren Endfläche der zweiten Kamera (2) angeordnet ist und die zweite Kamera (2) durch Eingreifen des vierten Schraubengewindes mit dem dritten Schraubengewinde (411) fest auf dem Objektivmontageabschnitt (41) montiert ist.

8. Doppelkameramodul nach Anspruch 7, ferner umfassend ein zweites optisches Filter (6) und einen zweiten Vorsprung (412), der an einer Position an der Innenwand des Objektivmontageabschnitts (41) und unter dem dritten Schraubengewinde (411) nach außen vorsteht,
wobei das zweite optische Filter (6) am zweiten Vorsprung (412) befestigt und gegenüber der zweiten Kamera (2) angeordnet ist, die an dem Objektivmontageabschnitt (41) montiert ist.

9. Mobiles Endgerät, umfassend das Doppelkameramodul nach einem der Ansprüche 1 bis 8.

## Revendications

1. Module à double caméra pour un terminal mobile, comprenant une première caméra (1) et une deuxième caméra (2), une base (3), un premier filtre optique (5), une première carte de circuit imprimé (7) et un premier capteur d'image (8), dans lequel le module à double caméra comprend de plus un support d'installation (4), dans lequel le support d'installation (4) comprend une partie de montage d'objectif (41) et une partie de support de base (42) reliée à la partie de montage d'objectif (41), la deuxième caméra (2) est montée sur la partie de montage d'objectif (41) et la base (3) est fixée sur la partie de support de base (42) ; et
un premier bossage (421) dépassant vers l'extérieur en correspondance d'une position sur la paroi intérieure de la partie de support de base (42), dans lequel le premier filtre optique (5) est fixé sur le premier bossage (421) et disposé à l'opposé de la première caméra (1) montée sur la base (3) ;
dans lequel la première caméra (1) est montée sur la base (3) ;
la première carte de circuit imprimé (7) est fixée au fond de la partie de support de base (42) ; et
le premier capteur d'image (8) est fixé en correspondance d'une position sur la première carte de circuit imprimé (7) opposée au premier filtre optique (5).

2. Module à double caméra selon la revendication 1, dans lequel la partie de montage d'objectif (41) est une première structure creuse, la partie de support de base (42) est une seconde structure creuse, et une paroi latérale extérieure de la partie de support de base (42) est intégralement formée avec une paroi latérale extérieure de la partie de montage d'objectif (41).

3. Module à double caméra selon la revendication 2, dans lequel une ligne axiale de la partie de support de base (42) est parallèle à une ligne axiale de la partie de montage d'objectif (41).

4. Module à double caméra selon la revendication 2, dans lequel la base (3) est fixée à une surface d'extrémité supérieure de la partie de support de base (42).

5. Module à double caméra selon la revendication 1, dans lequel la base (3) est une troisième structure creuse.

6. Module à double caméra selon la revendication 5, dans lequel un premier filetage de vis (31) est disposé sur une paroi intérieure de la base (3), un deuxième filetage de vis est disposé sur une surface d'extrémité extérieure de la première caméra (1) et la première caméra (1) est montée de manière fixe sur la base (3) par mise en prise du deuxième filetage de vis avec le premier filetage de vis (31).

7. Module à double caméra selon la revendication 2, dans lequel un troisième filetage de vis (411) est disposé sur une paroi intérieure de la partie de montage d'objectif (41), un quatrième filetage de vis est disposé sur une surface d'extrémité extérieure de la deuxième caméra (2), et la deuxième caméra (2) est montée de manière fixe sur la partie de montage d'objectif (41) par mise en prise du quatrième filetage de vis avec le troisième filetage de vis (411).

8. Module à double caméra selon la revendication 7, comprenant de plus un deuxième filtre optique (6), et un deuxième bossage (412) dépassant vers l'extérieur en correspondance d'une position sur la paroi intérieure de la partie de montage d'objectif (41) et sous le troisième filetage de vis (411),
dans lequel le deuxième filtre optique (6) est fixé sur le deuxième bossage (412) et disposé à l'opposé de la deuxième caméra (2) montée sur la partie de montage d'objectif (41).

9. Terminal mobile comprenant le module à double caméra selon l'une quelconque des revendications 1 à 8.
